(19) Europäisches Patentamt

European Patent Office

Office européen des brevets

(11) Veröffentlichungsnummer: **0 518 855 B1**

# (12) EUROPÄISCHE PATENTSCHRIFT

(45) Veröffentlichungstag der Patentschrift: **01.06.94**

(21) Anmeldenummer: **90903778.0**

(22) Anmeldetag: **06.03.90**

(86) Internationale Anmeldenummer:
**PCT/DE90/00159**

(87) Internationale Veröffentlichungsnummer:
**WO 91/13780 (19.09.91 91/22)**

(51) Int. Cl.⁵: **B60K 41/04**

---

(54) **STEUERUNG FÜR EINEN KRAFTFAHRZEUGANTRIEB.**

---

(43) Veröffentlichungstag der Anmeldung:
**23.12.92 Patentblatt 92/52**

(45) Bekanntmachung des Hinweises auf die
Patenterteilung:
**01.06.94 Patentblatt 94/22**

(84) Benannte Vertragsstaaten:
**DE FR GB IT**

(56) Entgegenhaltungen:
**EP-A- 0 011 088       EP-A- 0 166 894**
**EP-A- 0 182 376       EP-A- 0 342 643**
**DE-A- 3 821 245       GB-A- 2 151 727**
**US-A- 4 815 340**

**Bosch Technische Berichte, Band 7, 1983,**
**Stuttgart, Seiten 166-174, M. Schwab u.a.:**
**"Der Motoreingriff - ein neues Element der**
**elektron. Getriebesteuerung"**

(73) Patentinhaber: **SIEMENS AKTIENGESELL-**
**SCHAFT**
**Wittelsbacherplatz 2**
**D-80333 München(DE)**

(72) Erfinder: **GRAF, Friedrich**
**Amselweg 5**
**D-8400 Regensburg(DE)**

---

EP 0 518 855 B1

## Beschreibung

Die Erfindung betrifft eine Steuerung für einen Kraftfahrzeugantrieb, die versehen ist mit
- einer Motorsteueranordnung, durch die eine das Drehmoment des Motors beeinflussende Größe gesteuert wird, und
- einer Getriebesteueranordnung, durch die die Schaltvorgänge eines automatischen Getriebes mit Drehmomentwandler gesteuert werden und durch die der Motorsteueranordnung ein Eingriffssignal übermittelt wird, um einen vorgesehenen Schaltvorgang ruckfrei durchzuführen. Das Drehmoment kann z.B. über den Zündzeitpunkt, die Drosselklappenstellung oder die Kraftstoffeinspritzmenge verändert werden.

Bei einem bekannten Steuersystem für einen Kraftfahrzeugantrieb mit automatischem Getriebe erfolgt ein Motoreingriff mit einer Verringerung des Motordrehmoments beim Schalten des Getriebes, um einen Schaltruck zu vermeiden. Dieser Motoreingriff erfolgt nur, wenn er erforderlich ist. Das von der Getriebesteuerung zu der Motorsteuerung übermittelte Eingriffssignal wird zum einen bei Rückschaltungen von dem vierten in den dritten Gang und zum anderen bei Hochschaltungen unterdrückt (EP-A-0 342 643).

Bei einer anderen bekannten Steuerung für automatische Getriebe wird das Übersetzungsverhältnis in dem aktuellen Getriebegang gemessen und verändert, bis es dem Übersetzungsverhältnis in dem neuen Getriebegang entspricht. Dabei wird die Übersetzung in einem geschlossenem Regelkreis geregelt, dem als auszuwertende Eingangsgrößen die jeweilige Fahrzeuggeschwindigkeit und das sich ändernde Übersetzungsverhältnis zugeführt werden (EP-A-0 182 376).

Der Erfindung liegt die Aufgabe zugrunde, eine Steuerung der eingangs genannten Art zu schaffen, durch die Schaltvorgänge ruckfrei durchgeführt und der Verschleiß von Reibelementen des automatischen Getriebes verringert werden und die weitere Einflußgrößen auf den Schaltvorgang zu berücksichtigen ermöglicht.

Diese Aufgabe wird erfindungsgemäß dadurch gelöst,
- daß die Getriebesteueranordnung eine erste Schaltungsanordnung aufweist, von der in Abhängigkeit von dem Getriebeeingangsmoment, das sich aus $M_{ein} = WV \cdot M_{mot}$ ergibt, wobei die Wandlerverstärkung von der Getriebesteueranordnung und das Motordrehmoment von der Motorsteueranordnung ermittelt wird, und der Schaltungsart (S.A.) ein Anteil ermittelt wird, um den das Motordrehmoment für den Schaltvorgang zu ändern ist, und
- daß dieser Anteil als Steuerinformation an die Motorsteueranordnung übermittelt und damit das Motordrehmoment verändert wird.

Vorteilhafte Weiterbildungen der Erfindung sind den Unteransprüchen zu entnehmen.

Die Vorteile der Erfindung liegen insbesondere darin, daß das Motordrehmoment nicht nur verringert, sondern daß diese Verringerung ihrerseits bei bestimmten Schaltvorgängen, auf die noch eingegangen wird, verringert und damit das Motordrehmoment vergrößert wird.

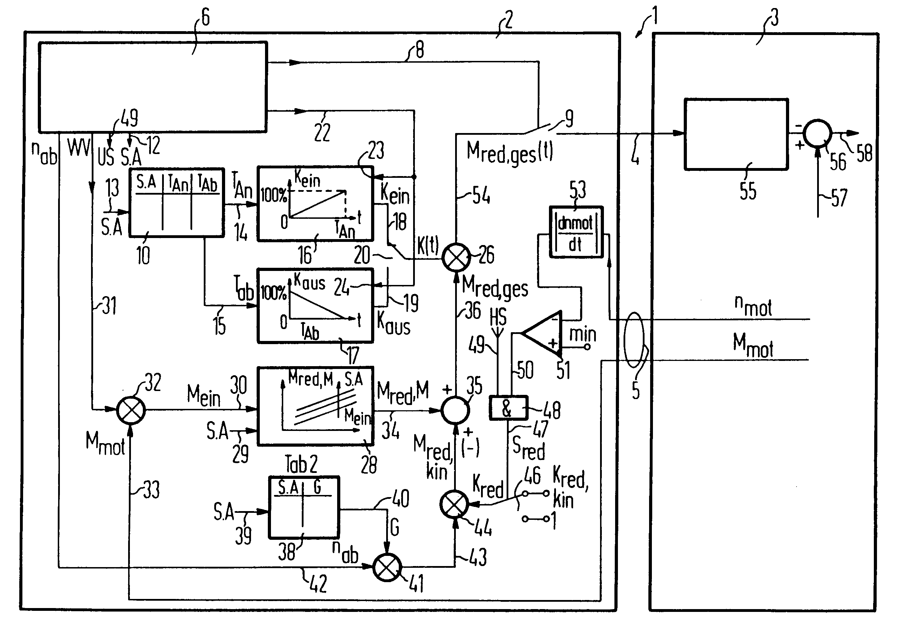

Ein Ausführungsbeispiel der Erfindung wird im folgenden anhand der Zeichnung erläutert. Die einzige Figur zeigt eine erfindungsgemäße Steuerung für einen Kraftfahrzeugantrieb in schematischer Darstellung.

Eine Steuerung 1 für einen nicht dargestellten Kraftfahrzeug-Antrieb enthält eine Getriebesteueranordnung 2 - im folgenden auch als Getriebesteuerung bezeichnet - und eine Motorsteueranordnung 3 - auch Motorsteuerung -, die durch einen Bus 4, 5, der eine schnelle Datenübertragungs-Schnittstelle bildet, miteinander verbunden sind. In der Zeichnung sind von diesem Bus symbolisch eine Leitung 4, über die Steuerinformation von der Getriebesteuerung 2 zu der Motorsteuerung 3 übertragen wird, sowie zwei Leitungen 5, über die Betriebszustandsinformationen von der Motorsteuerung 3 der Getriebesteuerung 2 übertragen werden, dargestellt. Der Bus kann auch aus einer Leitung bestehen, auf der die verschiedenen Signale zeitlich verschachtelt übertragen werden.

Die Getriebesteuerung 2 enthält einen konventionellen Schaltungsteil 6, der die Funktionen bekannter Getriebesteuerungen realisiert, und zusätzliche, nachfolgend beschriebene Schaltungsteile. In dem Schaltungsteil 6 wird ein Aktivierungssignal erzeugt und über eine Leitung 8 ausgegeben. Dieses Signal aktiviert einen Motoreingriff, indem es z.B. einen Schalter 9 schließt.

Die Wirkungsweise der Getriebesteuerung 2 läßt sich anhand folgender Gleichung für das verringerte oder reduzierte, zeitabhängige Gesamt-Motordrehmoment $M_{red,ges}(t)$ erläutern:

$$M_{red,ges}(t) = k(t) \cdot (M_{red,M} + n_{ab} \cdot G \cdot K_{red}) \qquad (A)$$

Hierin sind:
- $M_{red, M}$ der Anteil der Verringerung des Motordrehmoments oder "Momentenreduktion" (als Schutzfunktion für das Getriebe), abhängig von der Schaltungsart S.A. und dem Getriebeeingangsmoment $M_{ein}$. Die Schaltungsart enthält eine Information über den neuen und den alten Gang des vorgesehenen Gangwechsels sowie eine Information über den Schub- oder Zug-Betrieb des Kraftfahrzeugs. Das Getriebeeingangsmoment ergibt sich aus

$M_{ein} = WV \cdot M_{mot}$,

worin die Wandlerverstärkung WV von der Getriebesteuerung 2 und das Motordrehmoment $M_{mot}$ von der Motorsteuerung 3 ermittelt wird.

- $n_{ab} \cdot G \cdot K_{red} = M_{red,kin}$ der Anteil der Momentenreduktion, der ein durch Abbau kinetischer Energie im Schaltvorgang auftretendes Drehmoment ausgleichen soll. Hierin stellt $n_{ab} \cdot G$ den schaltungsspezifischen Anteil durch den Gangwechsel dar. $M_{red,kin}$ kann auch negativ sein, und zwar wenn bei Rückschaltungen im Schubbetrieb der Motor zweckmäßigerweise beschleunigt wird.

Wird andererseits eine Hochschaltung im Wandlungsbereich des Kraftfahrzeugantriebs durchgeführt, d.h. liegt der Betrag der zeitlichen Ableitung (manchmal auch als Gradient bezeichnet) der Motordrehzahl unter einem unteren Schwellenwert, dann kann der Anteil $M_{red,kin}$ durch Multiplikation mit dem Faktor $K_{red}$ verringert werden, da der Motor dann einen wesentlich kleineren Drehzahlsprung vollzieht und damit weniger kinetische Energie abgibt.

- k(t) ist eine zeitabhängige Funktion, die nur während des Einschaltens - Zeitspanne $T_{an}$ - und des Ausschaltens - Zeitspanne $T_{ab}$ - der Momentenreduktion wirksam ist. Bei der Hochschaltung z.B. ist $T_{an}$ etwa gleich groß $T_{ab}$ und die Funktion k(t) gibt einen gleichmäßigen Anstieg der Momentenreduktion $M_{red,ges}$ von Null auf ihren Höchstwert sowie einen entsprechenden Abfall auf Null.

Bei der Rückschaltung ist z.B. $T_{an} = 0$ und $T_{ab}$ hat einen größeren Wert als beim Hochschalten, so daß die Momentenreduktion von ihrem Höchstwert langsam auf Null abfällt.

Die vorstehend beschriebenen funktionalen Verknüpfungen und die sich daraus ergebenden Steuersignale werden in den nachfolgenden Schaltungsbestandteilen realisiert.

Ein erster Speicher 10 enthält in Tabellenform eine Zuordnung von Anstiegszeiten $T_{an}$ und Abklingzeiten $T_{ab}$ zu verschiedenen Werten der Schaltungsart S.A. Das die Schaltungsart S.A. kennzeichnende Signal wird von dem Getriebesteuerungs-Schaltungsteil 6 über eine Signalausgangsleitung 12 ausgegeben und gelangt über eine Signalleitung 13 zu dem Eingang des Speichers 10. Die entsprechenden Ausgangssignale $T_{an}$ und $T_{ab}$ gelangen über Signalleitungen 14 bzw. 15 zu den Eingängen eines ersten Signalgenerators 16 bzw. eines zweiten Signalgenerators 17. Diese erzeugen als Ausgangssignal in Abhängigkeit von den empfangenen Werten von $T_{an}$ bzw. $T_{ab}$ das zeitlich veränderliche Signal k(t), das von Null bis zu einem Maximalwert $K_{ein}$ ansteigt, bzw. von einem Maximalwert $K_{aus}$ bis Null abfällt.

Die Signalausgange der Signalgeneratoren 16, 17 sind über Leitungen 18, 19 mit zwei Klemmen eines Umschalters 20 verbunden, der durch ein von dem Schaltungsteil 6 über eine Leitung 22 abgegebenes "ein/aus"-Signal umgeschaltet wird. Dieses Signal gelangt auch zu Aktivierungs-Eingängen 23, 24 der Signalgeneratoren 16, 17, die somit aktiviert werden, um die Momentenreduktion ansteigen bzw. abklingen zu lassen. Das jeweilige Ausgangssignal des Umschalters 20 wird einem Multiplikator 26 zugeführt.

Ein Kennlinienspeicher 28 empfängt als Eingangssignale über Leitungen 29, 30 die bereits erwähnte Schaltungsart S.A. bzw. das Getriebeeingangsmoment $M_{ein}$.

Von dem Schaltungsteil 6 wird über eine Leitung 31 die Wandlerverstärkung WV an einen Multiplikator 32 übermittelt. An dessen anderen Eingang gelangt über eine Leitung 33 der von der Motorsteuerung 3 gelieferte Wert für das Motormoment $M_{mot}$. Die Multiplikation der beiden Werte in dem Multiplikator 32 ergibt wie erwähnt das Getriebeeingangsmoment $M_{ein}$.

In dem Kennlinienspeicher 28 wird in Abhängigkeit von den genannten Eingangssignalen als Ausgangssignal $M_{red,M}$ erzeugt und über eine Leitung 34 an ein Summierglied 35 gegeben.

Ein zweiter Speicher 38 empfängt über eine Leitung 39 die Information über die Schaltungsart S.A. und erzeugt in Abhängigkeit davon ein Ausgangssignal G, das die schaltungsbedingte Abgabe von Drehmoment durch einen Abbau kinetischer Energie des Motors kennzeichnet und auf einen Multiplikator 41 gegeben wird. An dessen anderen Eingang gelangt über eine Leitung 42 die von dem Schaltungsteil 6 gelieferte Getriebeausgangsdrehzahl $n_{ab}$. Der Ausgang des Multiplikators 41 ist über eine Leitung 43 mit einem Eingang eines Multiplikators 44 verbunden. Dessen anderer Eingang ist an den Ausgang eines Schalters 46 angeschlossen, der über eine Leitung 47 von dem Ausgangssignal eines UND-Gliedes 48 gesteuert wird.

An einen Eingang des UND-Gliedes 48 gelangt über eine Leitung 49 ein von dem Schaltungsteil 6 abgegebenes Signal HS, das beim Hochschalten den logischen Wert "1" hat. An dem zweiten Eingang des UND-Gliedes 48 liegt über eine Leitung 50 der Ausgang eines Komparators 51 an, in dem der Betrag der Ableitung der Motordrehzahl mit einem vorgegebenen unteren Grenzwert- oder Schwellwert verglichen wird. Der Betrag der Ableitung der Motordrehzahl $n_{mot}$ wird von einem Differentiator 53 gebildet. Liegt die Ableitung unter diesem Schwellwert, so ist das Ausgangssignal des Komparators 51 logisch "1". Sind alle Eingangssignale logisch "1", so schaltet das Ausgangssignal des UND-Gliedes 48 den Schalter 46 in die in der Zeichnung dargestellte obere Stellung. In dieser Stellung wird an den zweiten Eingang des Multiplikators 44 ein Wert $K_{red,kin}$ angelegt, der kleiner als eins ist. In der zweiten Schalterstellung, wenn zumindest eines der Eingangssignale des UND-Gliedes 48 nicht logisch "1" ist, wird an den Multiplikator 44 der Wert eins angelegt.

Ein Vergleich der oben angegebenen Gleichung (A) mit den vorstehend beschriebenen Schaltungsanordnungen läßt erkennen, daß an dem Ausgang des Multiplikators 44 ein Signal anliegt, das dem rechten Term in der Klammer der Gleichung (A) entspricht. In dem Summierglied 35 wird diesem Signal ein Signal addiert, das dem linken Term in der Gleichung (A) entspricht. Die Summe beider Signalanteile gelangt über die Leitung 36 zu dem Multiplikator 26, in dem sie mit einem Signalanteil multipliziert wird, das der zeitabhängigen Funktion k(t) von Gleichung (A) entspricht.

Am Ausgang des Multiplikators 26 steht somit ein Signal an, das die gesamte, in der Getriebesteuerung ermittelte Momentenreduktion darstellt, und zwar z.B. in Form eines prozentualen Anteils des gesamten aktuellen Motoren-Drehmoments. Dieser Wert gelangt über eine Leitung 54, den Schalter 9 und den Bus 4 zu der Motorsteuerung 3, und zwar in Form eines Eingriffssignals, das einen bestimmten Wert für die Verringerung des Motordrehmoments vorschreibt.

In der Motorsteuerung 3 wird das Eingrittssignal z.B. in einem Kennfeld-Speicher 55 in ein Korrektursignal für die Zündung, die Einspritzpumpe oder die Drosselklappenstellung umgesetzt. Das Korrektursignal wird in einem Addierglied 56 dem entsprechenden Steuersignal für den Zündzeitpunkt, die Kraftstoffeinspritzmenge oder die Drosselklappenstellung hinzugefügt, und zwar vorzeichenbehaftet. Das unkorrigierte Steuersignal gelangt über eine Leitung 57 zu dem Addierglied 56, das korrigierte Steuersignal wird über eine Leitung 58 dem jeweiligen Stellorgan, z.B. für den Zündzeitpunkt zugeführt. Dadurch wird das Motordrehmoment für den Schaltvorgang entsprechend verändert. In der Regel wird es verringert werden, in den vorstehend erwähnten Fällen kann es aber auch erhöht werden.

Die beschriebene Kraftfahrzeugantrieb-Steuerung ermöglicht somit ein genaues Berücksichtigen der verschiedenen auf den Schaltvorgang einwirkenden physikalischen Parameter und somit ein feinfühliges, ruckfreies Schalten des automatischen Getriebes. Die Reibungsbeanspruchung in den Reibelementen - Kupplungen und Bremsen - des automatischen Getriebes wird wirksam verringert.

**Patentansprüche**

1. Steuerung für einen Kraftfahrzeugantrieb, die versehen ist mit,
   - einer Motorsteuerung (3), durch die eine das Drehmoment des Motors beeinflussende Größe gesteuert wird, und
   - einer Getriebesteueranordnung (2), durch die die Schaltvorgänge eines automatischen Getriebes mit Drehmomentwandler gesteuert werden und durch die der Motorsteueranordnung (3) ein Eingriffssignal übermittelt wird, um einen vorgesehenen Schaltvorgang ruckfrei durchzuführen,
   **dadurch gekennzeichnet,**
   - daß die Getriebesteueranordnung (2) eine erste Schaltungsanordnung (28) aufweist, von der in Abhängigkeit
   - von dem Getriebeeingangsmoment ($M_{ein}$), das sich aus $M_{ein} = WV \cdot M_{mot}$ ergibt, wobei die Wandlerverstärkung (WV) von der Getriebesteueranordnung (2) und das Motordrehmoment ($M_{mot}$) von der Motorsteueranordnung (3) ermittelt wird,
   - und der Schaltungsart (S.A.) ein Anteil ermittelt wird, um den das Motordrehmoment für den Schaltvorgang zu ändern ist, und
   - daß dieser Anteil als Steuerinformation an die Motorsteueranordnung (3) übermittelt und damit das Motordrehmoment verändert wird.

2. Steuerung nach Anspruch 1,
   **dadurch gekennzeichnet,**
   daß sie eine zweite Schaltungsanordnung (10, 16, 17) aufweist, durch die der zeitliche Verlauf des Anstiegs und/oder des Abfalls des Eingriffssignals gesteuert wird.

3. Steuerung nach Anspruch 1,
   **dadurch gekennzeichnet,**
   daß sie eine dritte Schaltungsanordnung (38) aufweist, durch die ein Teil der Verringerung des Motordrehmoments, der durch den Abbau von kinetischer Energie bei einem Schaltvorgang auszugleichen ist, ermittelt wird.

4. Steuerung nach Anspruch 1,
   **dadurch gekennzeichnet,**
   daß sie eine vierte Schaltungsanordnung (44, 48, 51, 53) aufweist, durch die ein Teil der Verringerung des Motordrehmoments bei einem Betrieb des Kraftfahrzeugantriebs mit großem Wandlerschlupf herabgesetzt wird.

**5.** Steuerung nach Anspruch 1,
**dadurch gekennzeichnet,**
daß die Motorsteuerung (3) eine Steuerschaltung (55) enthält, in der die von der Getriebesteueranordnung erhaltene Steuerinformation in eine Veränderung des Zündzeitpunkts, der Kraftstoffeinspritzmenge oder der Drosselklappenstellung umgesetzt wird.

## Claims

**1.** Control system for a motor vehicle drive, which is provided with
- an engine control system (3) by which a variable which influences the torque of the engine is controlled, and
- a transmission control arrangement (2) by which the shifting operations of an automatic transmission with a torque converter are controlled and by which an intervention signal is transmitted to the engine control arrangement (3) in order to carry out an envisaged shifting operation in a jerk-free manner,
characterised in that
- the transmission control arrangement (2) has a first circuit arrangement (28) which as a function of
  - the transmission input torque ($M_{ein}$), which is obtained from $M_{ein} = WV \cdot M_{mot}$, the converter amplification (WV) being determined by the transmission control arrangement (2) and the engine torque ($M_{mot}$) being determined by the engine control arrangement (3),
  - and of the type of shift (S.A.)
  determines a fraction by which the engine torque is to be changed for the shifting operation, and
- this fraction is transmitted as control information to the engine control arrangement (3) and the engine torque is hence altered.

**2.** Control system according to Claim 1, characterised in that it has a second circuit arrangement (10, 16, 17), by which the time characteristic of the rise and/or of the drop of the intervention signal is controlled.

**3.** Control system according to Claim 1, characterised in that it has a third circuit arrangement (38), by which a part of the reduction of the engine torque which is to be compensated by the reduction of kinetic energy during a shifting operation is determined.

**4.** Control system according to Claim 1, characterised in that it has a fourth circuit arrangement (44, 48, 51, 53), by which a part of the reduction of the engine torque is reduced in the case of operation of the motor vehicle drive with high converter slip.

**5.** Control system according to Claim 1, characterised in that the engine control system (3) contains a control circuit (55) in which the control information received from the transmission control arrangement is converted into an alteration in the ignition instant, the fuel injection quantity or the throttle valve position.

## Revendications

**1.** Commande pour un dispositif d'entraînement de véhicule automobile, qui comporte
- un dispositif de commande (3) du moteur, qui commande une grandeur influençant le couple du moteur, et
- un dispositif (2) de commande de transmission, au moyen duquel sont commandés les processsus de commutation d'une transmission automatique à convertisseur de couple et au moyen duquel un signal d'attaque est transmis au dispositif (3) de commande du moteur pour l'exécution sans à-coup d'un processus de commutation prévu,
caractérisée par le fait
- que le dispositif (2) de commande de la transmission comporte un premier montage (28), qui détermine
  - en fonction du couple d'entrée ($M_{ein}$) de la transmission, qui est donné par $M_{ein} = WV.M_{mot}$, l'amplification (WV) du convertisseur étant déterminée par le dispositif (2) de commande de la transmission, et le couple moteur ($M_{mot}$) étant déterminé par le dispositif (3) de commande du moteur, et
  - en fonction du type de circuit (S.A.),
- détermine une composante pour modifier le couple moteur pour le processus de commutation, et
- que cette composante est retransmise en tant qu'information de commande au dispositif (3) de commande du moteur et que, de ce fait, le couple moteur est modifié.

**2.** Commande suivant la revendication 1, caractérisée par le fait qu'elle comporte un deuxième montage (10, 16, 17) qui permet de commander la variation dans le temps de la montée et/ou de la diminution du signal d'attaque.

3. Commande suivant la revendication 1, caractérisée par le fait qu'elle comporte un troisième montage (38), grâce auquel est déterminée une partie de la réduction du couple moteur, qui doit être compensée par la réduction de l'énergie cinétique lors du processus de commutation.

4. Commande suivant la revendication 1, caractérisée par le fait qu'elle comporte un quatrième montage (44, 48, 51, 53), qui réduit une partie de la diminution du couple moteur dans le cas d'un fonctionnement du dispositif d'entraînement du véhicule automobile avec un glissement important du convertisseur.

5. Commande suivant la revendication 1, caractérisé par le fait que le dispositif (3) de commande du moteur comporte un circuit de commande (55), dans lequel l'information de commande, reçue de la part du dispositif de commande de la transmission, est convertie en une modification de l'instant d'allumage, de la quantité d'injection du carburant ou de la position du papillon des gaz.